# EUROPEAN PATENT SPECIFICATION

(11) **EP 0 765 113 B1**
(45) Date of publication and mention of the grant of the patent: **27.10.1999**
(21) Application number: 95921173.1
(22) Date of filing: 26.05.1995
(51) Int. Cl.: A01M 7/00

(54) **METHOD FOR COATING PLANT SEEDLINGS AND SYSTEM FOR PERFORMING THE METHOD**
VERFAHREN ZUM BESCHICHTEN VON PFLANZENSETZLINGEN UND SYSTEM ZUM AUSFÜHREN DIESES VERFAHRENS
PROCEDE DE DISPOSITIF D'APPLICATION D'UN REVETEMENT SUR DE JEUNES PLANTS

(30) Priority: 30.05.1994 NO 941997
(43) Date of publication of application: 02.04.1997
(73) Proprietor: NORSK HYDRO ASA, 0240 Oslo (NO)
(72) Inventor: EIDISSEN, Harald, N-3745 Ulefoss (NO); GJESTLAND, Finn, N-3942 Skjelsvik (NO); GROENSTAD, Leif Kare, N-3766 Sannidal (NO); HELGETVEIT, Ottar Arvid, N-3736 Skien (NO); PETTERSEN, Jarl Markus, N-3274 Larvik (NO)
(74) Representative: Onn, Thorsten
(86) International application number: NO9500081
(87) International publication number: WO9532620

(56) References cited:
- CH-A- 623 373
- FR-A- 1 535 876
- US-A- 3 147 568
- US-A- 5 251 818

## Description

The present invention relates to a method for coating plant seedlings.

The invention also comprises a system for performing the coating method. This system comprises a reservoir for the coating, pump and means for supplying the coating to spray nozzles, and trays containing plant seedlings to be coated.

The present method and system are especially applicable for applying a wax layer on conifer seedlings to be protected against insect attacks.

For maximum forest production clear cuttings and replantation are normal forest management. However, if the seedlings are not protected in any way, they are to a large extent destroyed and killed by insect attacks. For conifer seedlings the pine weevil (Hylobiys abietis) is by far the greatest problem in Eurasian forests. The traditional method to reduce insect damage is application of chemical insecticides. For many years DOT was applied. Today it is common to use pyrethroides. Insecticides are applied either by spraying or dipping.

An equipment used for spraying is disclosed in US-A-5 251 818. The equipment is adapted for spraying plants grown in rows with insecticides and fungicides. Spraying is carried out over the entire height of these plants. This is carried out by using an equipment carried by an agricultural traction vehicle. The equipment comprises a reservoir for the chemicals and means for supplying them to a horizontal main duct and several branch ducts, extending in downward direction from the main duct, spaced in accordance with the distance of the rows of plants. One side of the plants is sprayed at each time with enough power to shake the leaves and stakes.

An equipment as described in US -A- 5 251 818 could not be used for applying molten or liquid wax to plant seedlings placed on trays. As it is important to cover only the lower part of the stem, an equipment spraying the whole plant is unsuitable. In contrast to using insecticides where it is not imperative that the whole plant is covered by the spray, the lower part of the seedlings must be completely covered to avoid attacks by the insects when using wax.

Different alternatives for application of insecticides have been evaluated and the goal has been to completely avoid use of chemical insecticides. A variety of physical methods for protection of conifer seedlings have been worked out and tested. Some of the mechanical forms have given some protection to the seedlings, but application on a large scale has so far not been possible. The main reasons therefore have been price on the equipment and complexity in application. Great efforts have also been put into use of semi-chemicals for protection of seedlings. So far use of chemical repellents or attractants have proved to have a limited effect on insect behaviour.

One way of reducing the insect damage on the seedlings is to cover the lower part of the stem with a protective layer. Wax or latex may be applied.

The main object of the invention was to arrive at a simple and cost effective method of coating plant seedlings.

Another object was to develop a method for giving the lower part of plant seedling stems, especially confer seedlings, a protective layer against insect attacks.

A further object was to develop a simple, sturdy and low cost system for carrying out the coating method.

The inventors decided to start their investigations by coating confer seedlings. Mineral wax was tested and found to have limited or no effect on seedling vitality. It was found that the pine weevil would not attack the bark through the wax layer. The wax should be applied by spraying molten or liquid wax on the lower part of the seeding stems.

Coating of the seedling stems with a protective layer, preferably based on wax, was then further investigated. One prerequisite with regard to coating properties would be that the coating should be effective under field conditions comprising temperature variations on the seeding stem from 45°C on a sunny day to -20°C at winter time. In order to attain maximum flexibility at low temperatures as well as being able to form a protective layer at high temperatures, it was found most useful to modify normal paraffin wax by addition of vegetable wax and antioxidants or use mineral wax and polymeric compounds.

Former attempts to solve the problem had partly failed because the equipment became too complicated or expensive. Accordingly, it was considered quite essential to arrive at simple, sturdy and cost effective equipment.

Usually the plant seedlings are placed on a tray in several rows and it was desired to apply the coating on the seedlings while they were on the trays. It was imperative that the coating covered the whole circumference of the stems and in order to obtain this various spraying system with small variations were developed. Spraying nozzles were placed on pipes. To be able to coat several rows with plant seedlings at a time, several such pipes were interconnected by forming a fork having several fork fingers or several pipes were arranged in parallel rows on the coating reservoir. Each pipe having at least one nozzle, and the fork fingers have at least one pair of opposing nozzles, which easily could be changed according to coating to be used at plants to be coated. The spraying system (the pipes) can either be stationary or moveable. If the system is stationary, the plant seedlings on the tray are transported in-between the pipes, and if the system is moveable the fork fingers or the pipes can be transported horizontally in-between the plant seedlings. The spraying angle, both horizontal and vertical can be regulated, this regulation could at least be obtained by varying the pressure of the coating supplied to the nozzles.

Control and regulation of the temperature of the coating during application proved to be quite important. The coating reservoir and a flexible hose from this to the fork was therefore equipped with heating means. The fork/pipes itself can be placed in a chamber where it could be kept at desired temperature before and after the actual spraying operation. Alternatively the pipes and nozzles are equipped with a heater in such way that they can be heated directly. The pipes and nozzles can then be heated by the means of steam, hot water, hot oil or electrically.

The temperature of the coating is about 80-85°C when applied on the plant seedlings. The stems of the plant seedlings will be heated, sometimes to temperatures above 50°C. Some plants do not endure this heating very well, and can be damaged. For this reason it is desired to protect the plant against heating. This can be done by applications of the coating in at least two steps. A thin layer of coating is applied on the stem at first. The coating is allowed to solidify before the final coating is applied on the stem. The first thin layer of coating will isolate the stem of the plant seedling against heating of the final coating, and the final coating is smooth. The first coating could have a lower melting point than the second coating. Alternatively the pipes can be equipped with nozzles for admixture of air/water for drying and/or cooling the plant seedlings after application of the coating. The principle of coating the seedlings in at least to steps can also be used if the seedlings are transported on a conveyor belt. The seedlings are sprayed with coating from nozzles at each side of the conveyor belt and can be coated at high speed.

The scope and special features of the invention are as defined by the attached claims

The invention will be further explained in connection with the description of the figures.
- Fig. 1: shows the coating system according to the invention.
- Fig. 2: shows the fork comprising spraying nozzles, arranged in a frame.
- Figs. 3a,b: show the fork fingers positioned in-between rows of seedlings viewed from above and sideways.
- Fig. 4: shows a pipe equipped with a heater.

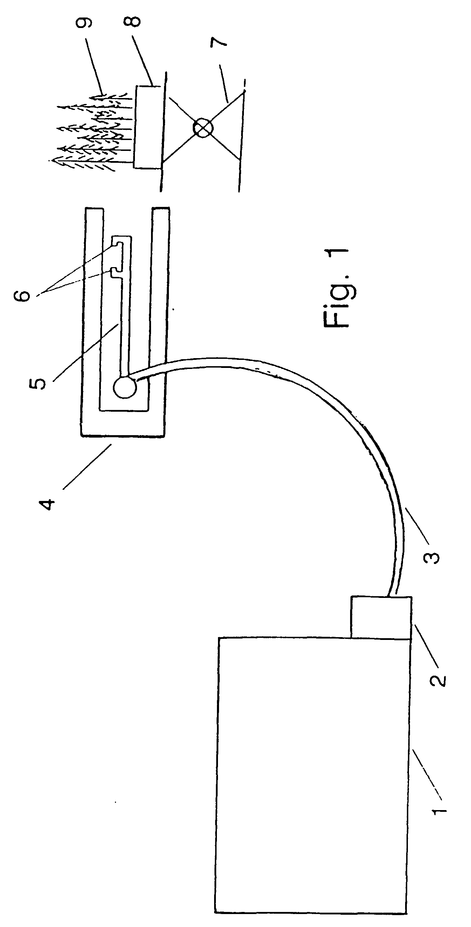

Figure 1 shows a reservoir 1 for the coating and a pump 2 for delivering the coating through a flexible hose 3 and further to a fork 5 placed in a chamber 4. Both the reservoir 1 and the chamber 4 are equipped with conventional heating means and temperature control. The hose 3 is preferably insulated and can also be equipped with heating means and temperature control. The plant seedlings 9 are placed on a tray 8 positioned on an adjustable table 7. The fork 5 with spray nozzles 6 can be moved out of the chamber 4 and above tray 8 in such a way that the fork fingers 11 become positioned in-between the rows of seedlings 9.

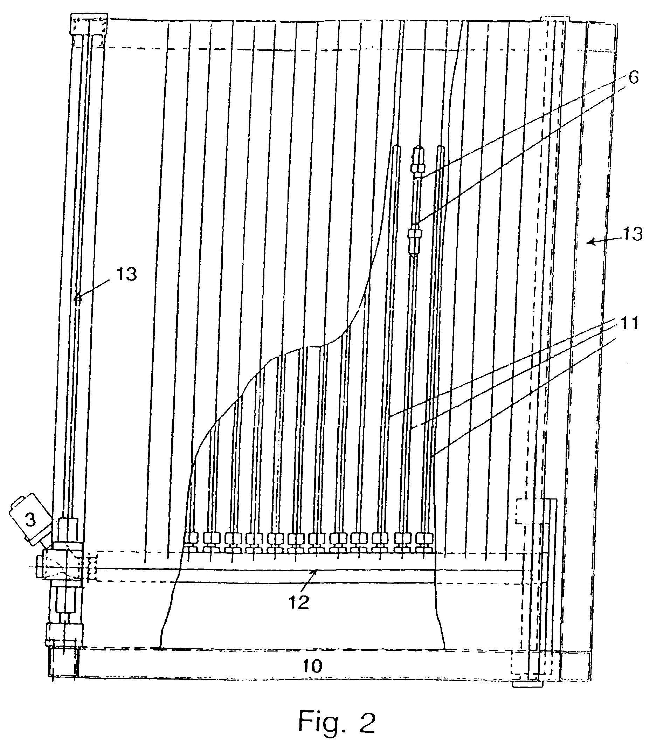

Figure 2 shows the fork 5 in more detail and its arrangement in a frame 10. The fingers 11 of the fork 5 are connected to a central bar 12 to which the coating is supplied through the hose 3 and further to each of the fork fingers and at least one pair of opposing nozzles 6. The vertical and horizontal spraying angle can be changed by changing the nozzles, but these angles will also be influenced by the temperature/viscosity and pressure of the coating. The fork 5 is arranged in a frame 10 having two parallel guiding bars 13. The fork can be moved forward and back along the guiding bars 13 by means of conventional means such as hydraulic or pneumatic means etc. In forward position the fork fingers will be positioned between the rows of seedlings 9 on the tray 8.

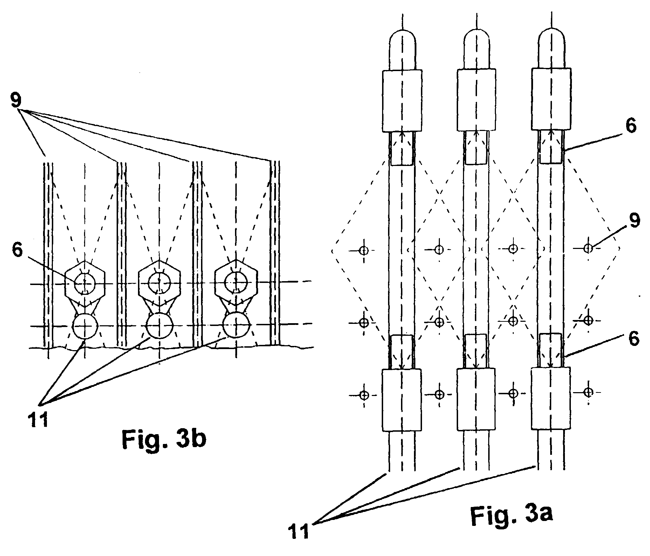

Figure 3a shows in detail the fork fingers 11 with nozzles 6 spraying coating on the seedlings 9.

Figure 3b shows the fork fingers 11 between the seedlings 9 viewed along the fork fingers 11. In this figure it is shown how much of the stem of the seedlings 9 will be covered by the coating. The arrangements shown in Figs. 3a,b are especially useful in securing complete coverage of coating on the seedling stems.

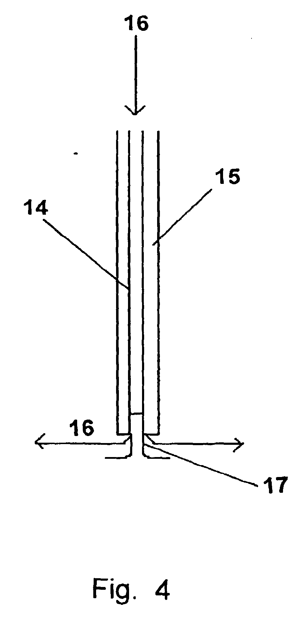

Fig.4 shows a pipe 14 equipped with a heater 15. The coating 16 is led into the pipe 14 where it is heated by steam, hot water/oil or electrically. The coating is sprayed horizontally from a vertical nozzle 17.

The inventors have by the present invention obtained a simple and economic coating of seedlings. The method and system are especially useful in protection of part of the stem of conifer seedlings with wax coatings. The application of the special fork enables complete coverage of the whole circumference of the stems at desired height. The system is sturdy and most flexible with regard to type of coating to be used and is simple to operate.

## Claims

1. Method for coating plant seedlings using a spraying system consisting of a fork having several fork fingers interconnected to a coating reservoir, each fork finger having at least one nozzle,
**characterized in that** the fork fingers during application of the coating are horizontally positioned in-between rows of plant seedlings and that a coating that subsequently solidifies and provides a solid film is supplied in liquid form as a melt.

2. Method according to claim 1,
**characterized in that**
the coating comprises wax supplied from a heated reservoir by means of a pump, through a flexible, insulated hose to a stationary or moveable spraying system comprising fork fingers having at least one pair of opposing nozzles.

3. Method according to claim 1,
**characterized in that**
the spraying system is placed in a heated chamber from which it can be moved forward and back above a tray containing rows of seedlings.

4. Method according to claim 1,
**characterized in that**
the spraying system is stationary, and that the plant seedlings are placed on a tray and are moved in-between the fork fingers.

5. Method according to claim 1,
**characterized in that**
the fork fingers of the spraying system are equipped with a heater, and that the fork fingers can be heated by means of steam, hot water/oil or electrically.

6. Method according to claim 1,
**characterized in that**
the temperature and pressure of the coating can be regulated and that vertical and horizontal spray angles from the nozzles can be varied.

7. Method according to claim 1,
**characterized in that**
the coating is applied in at least to steps, by application of a first thin layer of coating and this layer is allowed to solidify before the final coating is applied.

8. Coating system for performing the method according to claims 1-7 comprising a reservoir (1) for coating a pump (2) and supply means (3) for supplying the coating to a fork (5) having several fork fingers (11), each fork finger having at least one nozzle (6), and a array (8) containing seedlings (9), **characterized in that** the reservoir (1) is equipped with means for controlling/ regulating the temperature of the coating and the fork fingers are either supported with a heater (15) or the system is arranged in a chamber (4) equipped with heating means and the spraying system is stationary or moveable.

9. Coating system according to claim 8,
**characterized in that**
the fork fingers (11) have at least one pair of opposing nozzles (6) and are connected to a central bar (12) to which coating can be supplied by means of a pump through a hose (3) and that the fork (5) and the bar (12) can be moved forward and back along parallel guiding bars (13) connected to a frame (10) arranged in the chamber (4).

## Patentansprüche

1. Verfahren zum Beschichten von Pflanzensämlingen unter Verwendung eines aus einer Gabel mit mehreren miteinander mit einem Beschichtungsvorratsbehälter verbundenen Gabelfingern bestehenden Sprühsystems, **dadurch gekennzeichnet, daß** die Gabelfinger während des Aufbringens der Beschichtung zwischen Pflanzensämlingreihen angeordnet sind, und daß eine Beschichtung, die sich im wesentlichen verfestigt und einen festen Film bereitstellt, in flüssiger Form als Schmelze zugeführt wird.

2. Verfahren nach Anspruch 1, **dadurch gekennzeichnet, daß** die Beschichtung Wachs umfaßt, das von einem beheizten Vorratsbehälter mittels einer Pumpe durch einen flexiblen isolierten Schlauch zu einem stationären oder beweglichen Sprühsystem zugeführt wird, das Gabelfinger mit zumindest einem Paar gegenüberliegender Düsen umfaßt.

3. Verfahren nach Anspruch 1, **dadurch gekennzeichnet, daß** das Sprühsystem in einer beheizten Kammer plaziert ist, von der es über ein Sämlingreihen umfassendes Tablett vor und zurück bewegt werden kann.

4. Verfahren nach Anspruch 1, **dadurch gekennzeichnet, daß** das Sprühsystem stationär ist, und daß die Pflanzensämlinge auf einem Tablett plaziert und zwischen den Gabelfingern bewegt werden.

5. Verfahren nach Anspruch 1, **dadurch gekennzeichnet, daß** die Gabelfinger des Sprühsystems mit einer Heizung ausgestattet sind, und daß die Gabelfinger mittels Dampf, warmem Wasser/Öl oder elektrisch beheizbar sind.

6. Verfahren nach Anspruch 1, **dadurch gekennzeichnet, daß** die Temperatur und der Druck der Beschichtung regelbar ist, und daß vertikale und horizontale Sprühwinkel von den Düsen veränderbar sind.

7. Verfahren nach Anspruch 1, **dadurch gekennzeichnet, daß** die Beschichtung in zumindest zwei Schritten aufgebracht wird, indem eine erste dünne Beschichtungslage aufgebracht wird und es dieser Lage ermöglicht wird, sich zu verfestigen, bevor die Endbeschichtung aufgebracht wird.

8. Beschichtungssystem zum Durchführen des Verfahrens nach den Ansprüchen 1 bis 7, umfassend einen Vorratsbehälter (1) für Beschichtung, eine Pumpe (2) und eine Zuführeinrichtung (3) zum Zuführen der Beschichtung zu einer Gabel (5) mit mehreren Gabelfingern (11), wobei jeder Gabelfinger zumindest eine Düse (6) umfaßt, und ein Sämlinge (9) enthaltendes Tablett (8), **dadurch gekennzeichnet, daß** der Vorratsbehälter (1) mit einer Einrichtung zum Steuern/Regeln der Temperatur der Beschichtung ausgestattet ist, und die Gabelfinger entweder durch eine Heizung (15) unterstützt sind oder das System in einer mit einer Heizeinrichtung ausgestatteten Kammer (4) angeordnet ist, und das Sprühsystem stationär oder beweglich ist.

9. Beschichtungssystem nach Anspruch 8, **dadurch gekennzeichnet, daß** die Gabelfinger (11) zumindest ein Paar gegenüberliegende Düsen (6) aufweisen und mit einer zentralen Strebe (12) verbunden sind, zu der mittels einer Pumpe durch einen Schlauch (3) Beschichtung zuführbar ist, und daß die Gabel (5) und die Strebe (12) entlang paralleler Führungsstreben (13), die mit einem in der Kammer (4) angeordneten Rahmen (10) verbunden sind, vor und zurück bewegbar ist.

## Revendications

1. Procédé pour revêtir des jeunes plants, utilisant un système de pulvérisation constitué d'une fourche à plusieurs branches interconnectées à un réservoir de revêtement, chaque branche de fourche comportant au moins un diffuseur,
caractérisé en ce que les branches de fourche pendant l'application du revêtement sont positionnées horizontalement entre deux rangées de jeunes plants et qu'un revêtement qui se solidifie ultérieurement et constitue un film solide, est fourni sous une forme liquide comme un produit fondu.

2. Procédé selon la revendication 1, caractérisé en ce que
le revêtement comprend de la cire fournie à partir d'un réservoir chauffé, au moyen d'une pompe, à travers un tuyau flexible et isolé vers un système de pulvérisation fixe ou mobile, comprenant des branches de fourche comportant au moins une paire de diffuseurs opposés.

3. Procédé selon la revendication 1, caractérisé en ce que
le système de pulvérisation placé dans une chambre chauffée à partir de laquelle il peut être déplacé vers l'avant et vers l'arrière au-dessus d'un plateau contenant des rangées de jeunes plants.

4. Procédé selon la revendication 1, caractérisé en ce que
le système de pulvérisation est fixe, et en ce que les jeunes plants sont placés sur un plateau et sont déplacés entre deux branches de fourche.

5. Procédé selon la revendication 1, caractérisé en ce que
les branches de fourche du système de pulvérisation sont munies d'un dispositif chauffant, et en ce que les branches de fourche peuvent être chauffées au moyen de vapeur, d'eau/d'huile chaude ou électriquement.

6. Procédé selon la revendication 1, caractérisé en ce que
la température et la pression du revêtement peuvent être régulées et en ce que les angles de pulvérisation verticale et horizontale à partir des diffuseurs peuvent varier.

7. Procédé selon la revendication 1, caractérisé en ce que
le revêtement est appliqué au moins en étapes,par l'application d'une première couche mince de revêtement et on laisse cette couche se solidifier avant que le revêtement final soit appliqué.

8. Système de revêtement pour exécuter le procédé selon les revendications 1 à 7 comprenant un réservoir (1) de revêtement, une pompe (2) et des moyens d'alimentation (3) pour fournir le revêtement à une fourche (5) comportant plusieurs branches de fourche (11), chaque branche de fourche comportant au moins un diffuseur (6), et un plateau (8) contenant des jeunes plants (9),
caractérisé en ce que le réservoir (1) est muni de moyens pour contrôler/réguler la température du revêtement et en ce que les branches de fourche sont, soit supportées par un dispositif chauffant (15), soit le système est agencé dans une chambre (4) pourvue de moyens chauffant et le système de pulvérisation est fixe ou mobile.

9. Système de revêtement selon la revendication 8,
caractérisé en ce que
les branches de fourche (11) comportent au moins une paire de diffuseurs opposés (6) et sont connectées à une barre centrale (12) vers laquelle le revêtement peut être amené au moyen d'une pompe par l'intermédiaire d'un tuyau (3) et en ce que la fourche (5) et la barre (12) peuvent être déplacées vers l'avant et vers l'arrière le long de barres de guidage paralléles (13) connectées à un bâti (10) agencé dans la chambre (4).
